# FASCICULE DE BREVET EUROPEEN

(11) **EP 3 788 249 B1**
(45) Date de publication et mention de la délivrance du brevet: **11.12.2024**
(21) Numéro de dépôt: 19728126.4
(22) Date de dépôt: 29.04.2019
(51) Int. Cl.: F02K 7/18, F02K 9/78, F42B 10/40, F42B 10/64

(54) **PROJECTILE PROPULSÉ PAR STATORÉACTEUR**
PROJEKTIL MIT STAUSTRAHLTRIEBWERK
RAMJET-PROPELLED PROJECTILE

(30) Priorité: 02.05.2018 FR 1800453
(43) Date de publication de la demande: 10.03.2021
(73) Titulaire: KNDS Ammo France, 78000 Versailles (FR)
(72) Inventeur: TROUILLOT, Christian, 18023 Bourges (FR)
(74) Mandataire: Cabinet Chaillot
(86) Numéro de dépôt international: PCT/IB2019/053475
(87) Numéro de publication internationale: WO 2019/211716

(56) Documents cités:
- EP-A1- 3 150 957
- WO-A2-2012/090202
- DE-A1- 3 327 945
- DE-B- 1 025 215
- GB-A- 2 090 384
- GB-A- 2 329 455
- JP-A- 2015 168 314
- US-A- 2 540 594
- US-A- 2 684 570
- US-A- 6 058 846
- US-B1- 9 823 053

## Description

Le domaine technique de l'invention est celui des projectiles propulsés et en particulier des projectiles d'artillerie propulsés.

De nombreuses solutions sont connues pour accroître la portée d'un projectile d'artillerie. Il est connu ainsi de doter la partie arrière du projectile d'un culot creux ou d'un bloc arrière générateur de gaz (plus connu sous la dénomination anglo saxonne de Base-Bleed).

Ces solutions permettent de diminuer la traînée de culot du projectile qui est générée par la zone dite « d'eau morte » en arrière du culot, zone qui est en dépression par rapport à l'écoulement amont non perturbé.

L'augmentation de portée qu'ils procurent est intéressante en pourcentage mais reste limitée en valeur absolue, on peut ainsi passer de 30km de portée à environ 40 km grâce à un Base-Bleed.

Pour augmenter la portée des projectiles d'artillerie, il a déjà été proposé de doter ces projectiles de propulseurs. Ainsi les brevets FR2479905 et FR2522134 décrivent un obus comportant au niveau de son ogive un petit propulseur à poudre qui est allumé au cours de la phase initiale de la trajectoire pour prolonger dans une certaine mesure l'impulsion résultant du tir canon.

Il a également été proposé, par exemple dans les brevets RU2513326 et US5853143, d'équiper un projectile d'artillerie d'un propulseur de type statoréacteur.

Une telle solution, par rapport à un projectile autopropulsé à poudre permet de réduire la masse du matériau propulsif embarqué (l'oxydant ou comburant étant alors constitué par l'oxygène de l'air).

Cette solution est cependant généralement mise en oeuvre pour des projectiles à tir tendus et pour lesquels on cherche à réduire la durée du vol. Voir par exemple le brevet FR2629584 qui décrit un projectile anti hélicoptère.

Les projectiles propulsés ont une forte dispersion balistique qui s'accroît par ailleurs fortement avec la portée.

Il devient donc indispensable, si on souhaite augmenter la portée du projectile au-delà des valeurs classiques de 40 ou 42 km et répondre aux besoins de l'artillerie future, et en particulier obtenir une précision métrique associée à une grande portée (voire indépendante de la portée), de doter le projectile de moyens permettant de corriger sa trajectoire.

Les moyens de correction de trajectoire connus comprennent des gouvernes disposées au niveau de l'ogive du projectile (dénommés usuellement « Canards Actuating System » ou CAS). Ces moyens sont généralement associés à des obus ou projectiles qui ne sont pas propulsés par statoréacteur, tels que ceux décrits par les brevets EP1297292, FR2768809, EP2767794, ou FR3054030.

En effet, la mise en place de gouvernes de correction de trajectoire est peu compatible de la géométrie d'un projectile à statoréacteur et de l'aérodynamique de l'entrée d'air axiale qui ne doit présenter aucun obstacle ni singularité aérodynamique pour assurer l'amorçage de la combustion et son fonctionnement nominal en phase de croisière.

Le brevet DE3321945 décrit un projectile tiré par un canon et qui comporte une charge utile montée coulissante par rapport à un propulseur. A la sortie du tube de l'arme l'accélération diminue et la charge utile est poussée hors du tube du propulseur par la pression des gaz de tir. Le déplacement de la charge utile suffit à ouvrir le passage de l'air dans une chambre annulaire, ce qui allume le statoréacteur.

Ce projectile est dépourvu de moyens de correction de sa trajectoire. Par ailleurs il n'est pas question de refermer sur trajectoire l'orifice d'entrée de l'air pour couper le statoréacteur.

Le brevet GB2090384 divulgue un projectile tel que défini dans le préambule de la revendication 1.

C'est le but de l'invention que de proposer un projectile propulsé par statoréacteur qui est cependant pilotable afin de lui conférer une précision d'atteinte de son objectif indépendamment de la portée, donc du temps de vol.

L'invention est plus particulièrement décrite dans son application à un obus d'artillerie.

Ainsi l'invention a pour objet un projectile propulsé par statoréacteur, projectile comprenant un corps externe et un empennage déployable, projectile comportant à l'intérieur du corps une chambre dans laquelle est logé un bloc de semi-propergol annulaire ablatable ainsi qu'une enveloppe renfermant une charge militaire, le corps externe comportant une entrée d'air pour permettre à l'air d'entrer dans la chambre, le corps comportant également une ouverture arrière sur laquelle est positionnée une tuyère, projectile caractérisé en ce qu'il comporte un module de pilotage disposé axialement et qui s'étend au travers de l'entrée d'air, le module de pilotage pouvant être déplacé axialement par un moyen moteur, lors du vol du projectile et à un instant défini sur trajectoire, dit instant d'extinction, d'une position arrière dans laquelle il n'obture pas l'entrée d'air, vers une position avant dans laquelle il vient obturer l'entrée d'air, le module de pilotage renfermant au moins deux gouvernes canard qui sont déployables à l'extérieur du projectile après obturation de l'entrée d'air.

Le module de pilotage pourra renfermer un moyen de calcul incorporant des algorithmes de pilotage, le moyen de calcul assurant la commande du déplacement du module de pilotage à l'instant d'extinction.

Plus particulièrement, le projectile propulsé constituera un projectile d'artillerie destiné à être tiré par un canon, projectile dont le corps externe portera une ceinture dérapante.

Selon un mode particulier de réalisation, le module de pilotage pourra se trouver avant tir dans sa position avant, le module de pilotage reculant par inertie lors du tir canon de façon à venir occuper sa position arrière dans laquelle il sera en appui contre l'enveloppe de charge militaire.

Avantageusement, le projectile pourra comporter un moyen de verrouillage assurant l'immobilisation du module de pilotage en position arrière.

Le moyen moteur pourra comprendre un moyen de stockage d'énergie potentielle élastique, ce moyen étant activé par le recul du module de pilotage de sa partie avant à sa partie arrière, le moyen de verrouillage étant libéré à l'instant d'extinction défini sur trajectoire.

Selon un autre mode de réalisation, le module de pilotage se trouve avant tir dans sa position avant, le module de pilotage pouvant être déplacé par le moyen moteur, après tir et à un instant, dit d'allumage, défini sur trajectoire, de façon à venir occuper sa position arrière.

Le moyen moteur pourra ainsi déplacer, progressivement ou de façon incrémentale, à différents instants successifs définis sur trajectoire, le module de pilotage de sa position avant vers sa position arrière.

Selon une variante, le moyen moteur pourra déplacer le module de pilotage vers sa position arrière à l'issue de la phase pilotée de façon à dégager l'entrée d'air et accélérer ainsi le projectile lors d'une phase terminale de sa trajectoire.

Le module de pilotage peut comporter une jupe arrière qui peut glisser sur une paroi externe de l'enveloppe lors du déplacement du module de pilotage de façon à améliorer la continuité de l'écoulement de l'air lors du fonctionnement du statoréacteur et pour toutes les positions longitudinales du module de pilotage.

Avantageusement, le projectile comportera un culot arrière obturant la tuyère lors du tir, culot assurant le maintien de l'empennage arrière et qui est éjecté à la sortie du canon.

L'invention sera mieux comprise à la lecture de la description qui va suivre de modes particuliers de réalisation, description faite en référence aux dessins annexés et dans lesquels :
[Fig. 1] est une vue schématique et en coupe longitudinale d'un projectile propulsé selon un mode de réalisation de l'invention ;
[Fig. 2] est une courbe montrant les différentes phases de vol du projectile selon ce mode de réalisation ;
[Fig. 3a] est une vue de détail partielle et schématique qui montre un mode de réalisation d'un moyen moteur, le projectile étant en phase de stockage ;
[Fig. 3b] est une vue de détail partielle et schématique qui montre le mode de réalisation d'un moyen moteur de la Figure 3a, le projectile étant en phase propulsée ;
[Fig. 4a] est une vue en coupe longitudinale du projectile selon ce mode de réalisation au cours d'une phase de sa trajectoire, le projectile étant à la sortie du tube de l'arme ;
[Fig. 4b] est une vue en coupe longitudinale du projectile selon ce mode de réalisation au cours d'une phase de sa trajectoire, le projectile étant au cours de sa phase propulsée ;
[Fig. 4c] est une vue en coupe longitudinale du projectile selon ce mode de réalisation au cours d'une phase de sa trajectoire, le projectile étant au cours de sa phase guidée ;
[Fig. 5] est une vue de détail partielle d'une variante de réalisation d'un moyen moteur ;
[Fig. 6] représente des courbes montrant l'influence de l'altitude sur le débit d'air d'un statoréacteur ;
[Fig. 7] est une courbe montrant les différentes phases de vol d'un projectile mettant en oeuvre cette variante de réalisation du moyen moteur.

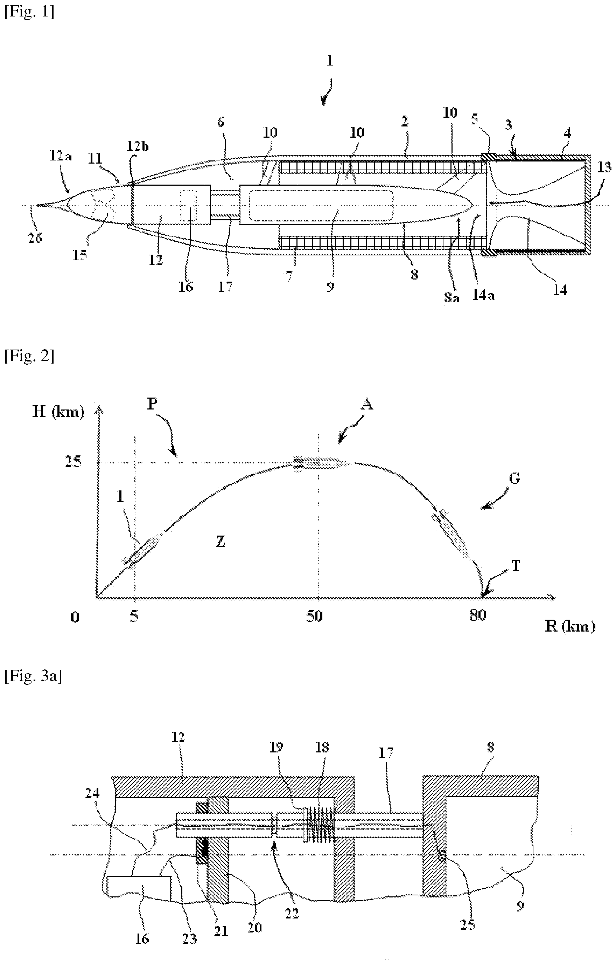

En se reportant à la figure 1, un projectile 1 propulsé par statoréacteur selon un mode de réalisation de l'invention comprend un corps 2 et un empennage déployable 3 qui est maintenu replié, lors des phases de stockage et pendant le parcours balistique dans le tube, par un culot arrière de poussée 4. Le corps 2 porte une ceinture dérapante 5 qui permet d'assurer l'étanchéité aux gaz à l'intérieur du tube de l'arme et qui permet également de limiter par glissement la vitesse de rotation pouvant être communiquée au projectile par les rayures du tube de l'arme (le taux de glissement est de l'ordre de 90% au minimum). En effet un tube d'artillerie est généralement rayé pour assurer la mise en rotation des projectiles.

Le culot 4 sera éjecté à la sortie du tube de l'arme et l'empennage 3 se déploiera pour assurer l'aérostabilisation du projectile sur trajectoire.

L'aérostabilisation est nécessaire en raison de l'architecture du projectile (faible moment d'inertie longitudinal qui ne permet pas de respecter les critères de stabilité gyroscopique) et de la diminution de la vitesse de roulis sur trajectoire lorsque le projectile sera en phase pilotée en raison du coefficient d'amortissement en roulis (Clp) élevé de l'empennage. L'aérostabilisation est enfin nécessaire pour rendre possible le pilotage ultérieur via des gouvernes. L'asservissement des braquages des gouvernes à la position en roulis du projectile est en effet limité en vitesse de roulis par la bande passante du calculateur et des actionneurs.

Le projectile devant être aérostabilisé, la présence d'une ceinture dérapante est donc nécessaire pour limiter les contraintes mécaniques qui augmentent comme le carré de la vitesse de rotation et éviter les effets Magnus qui peuvent déstabiliser dynamiquement le projectile.

La vitesse de rotation de l'obus en sortie de tube est de l'ordre de quelques 10 tours par seconde.

De telles ceintures dérapantes sont bien connues de l'Homme du Métier dans le domaine des projectiles d'artillerie. On pourra consulter les brevets WO03001141, EP1693646 et EP1386120 qui décrivent de telles ceintures.

Les empennages déployant sont également bien connus de l'Homme du Métier (voir le brevet EP0905473).

Le projectile 1 comporte à l'intérieur du corps 2 une chambre 6 dans laquelle est logé un bloc 7 annulaire d'un combustible constitué d'un semi-propergol ablatable.

La chambre 6 reçoit également une enveloppe 8 qui renferme une charge militaire 9 par exemple un chargement explosif.

L'enveloppe 8 est reliée au corps 2 par des bras de liaison radiaux 10 qui sont profilés et qui sont régulièrement répartis angulairement. Il y a ici trois groupes de trois bras 10. Les trois bras de chaque groupe sont espacés angulairement les uns des autres de 120°.

Le corps 2 comporte une entrée d'air 11 annulaire qui est obturée en phase de stockage et de tir par un module de pilotage 12 (cette position avancée - figure 1 - est sa position de référence).

L'entrée d'air 11 est destinée à permettre à l'air d'entrer dans la chambre 6 lorsque le projectile est en phase propulsée. Le corps 2 comporte également une ouverture arrière 13 sur laquelle est positionnée une tuyère 14.

Le culot 4, dont la fonction première est d'accélérer le projectile en lui communiquant la poussée des gaz de tir, permet également d'obturer la tuyère 14 lors du tir, isolant ainsi le bloc combustible 7 du statoréacteur des gaz chauds de la charge de poudre propulsive qui poussent le projectile hors du tube de l'arme.

Le module de pilotage 12 renferme au moins deux gouvernes canard 15 (disposées dans un même plan et matérialisant un plan de pilotage) ainsi que leur mécanisme de déploiement (non représenté). De tels dispositifs de gouvernes déployables sont bien connus et décrits en particulier par les brevets FR2949848, FR2846080, FR2864613 et FR2891618.

Il est ainsi aisé d'intégrer des gouvernes canard et leur mécanisme de déploiement et d'orientation dans un module de pilotage ayant un diamètre de l'ordre de 60 à 90 millimètres qui est incorporé dans un projectile de calibre 155 millimètres.

Le module de pilotage 12 renferme des capteurs (inertiels, magnétiques...) et également un moyen de calcul 16 incorporant des algorithmes de pilotage permettant la commande du braquage des gouvernes pour diriger le projectile vers une cible dont les coordonnées auront été introduites dans le moyen de calcul 16 avant tir par un moyen de programmation non représenté, par exemple par une interface de connexion ou par programmation sans contact au travers d'une boucle inductive reliée au moyen de calcul 16.

Le module de pilotage 12 est donc un sous-ensemble du projectile qui incorpore des moyens permettant de corriger la trajectoire du projectile (gouvernes déployables 15). Ce module de pilotage pourra également renfermer les moyens associés aux gouvernes et permettant leur commande (moyen de calcul 16). Les moyens de calcul pourraient être positionnés à un autre endroit du projectile, par exemple dans l'enveloppe 8, mais il est plus avantageux de les loger dans le module de pilotage 12 qui est mobile par rapport à l'enveloppe 8.

Le module de pilotage 12 est disposé axialement et il s'étend au travers de l'entrée d'air 11 et présente en particulier une pointe 12a s'étendant en avant de l'entrée d'air 11. Le module de pilotage 12 peut être déplacé axialement le long de l'axe 26 du projectile par un moyen moteur, lors du vol du projectile et à un instant souhaité sur trajectoire (c'est-à-dire un instant défini, dit instant d'extinction). Le déplacement se fera d'une position arrière, dans laquelle le module de pilotage 12 est en appui contre l'enveloppe 8 de la charge militaire 9, vers une position avant dans laquelle il vient obturer l'entrée d'air 11, donc stopper la combustion du bloc combustible 7 et arrêter le statoréacteur. Ce dispositif permet donc de maîtriser la durée de fonctionnement du statoréacteur ce qui est un des avantages de l'invention.

Le module de pilotage 12 comporte un épaulement périphérique 12b qui vient en appui contre une surface de butée annulaire portée par le corps 2 lorsque ce module 12 se trouve dans la position d'obturation représentée à la figure 1.

Bien entendu le profil externe du module de pilotage 12 est défini de façon à favoriser l'écoulement de l'air et son entrée à l'intérieur de la chambre 6 lorsque le module de pilotage 12 est dans sa position arrière et que l'entrée d'air 11 est dégagée. Ce profil est bien connu de l'Homme du métier, et il est fait appel classiquement à des essais en soufflerie pour optimiser ce profil qui assure la fonction importante de comprimer et d'échauffer l'écoulement en amont de la chambre de combustion 6.

Il en est de même pour le profil externe de l'enveloppe 8 associé à celui de la tuyère 14, qui transforme en énergie cinétique l'énergie calorifique créée dans la chambre de combustion 6 et à l'origine de la poussée, et en particulier celui de son extrémité arrière 8a qui est arrondie en regard du col 14a de la tuyère 14.

Le moyen de calcul 16 permet d'assurer la commande du déplacement du module de pilotage 12 à un instant souhaité sur trajectoire (c'est-à-dire à un instant défini) et il permet aussi de commander le déploiement des ailettes 15 comme cela sera décrit par la suite. Il est clair qu'on entend par « instant souhaité sur trajectoire » un instant qui est prédéfini par conception du projectile ou bien qui a été défini et programmé avant le tir. Cet instant est géré par le moyen de calcul 16 du module de pilotage 12.

L'instant d'extinction est ainsi l'instant auquel le moyen de pilotage 12 est déplacé de sa position arrière à sa position avant dans laquelle il obture l'entrée d'air 11
Le déplacement se fait par coulissement du module de pilotage 12 par exemple sur une ou plusieurs colonnettes 17 solidaires de l'enveloppe 8 et qui pénètrent dans le module de pilotage 12 lors du recul de ce dernier. On pourra utiliser alternativement une seule colonnette ou axe central. Le moyen moteur pourra être constitué par un petit moteur incorporé dans le module de pilotage 12 et engrenant par exemple sur une crémaillère portée par une des colonnettes 17.

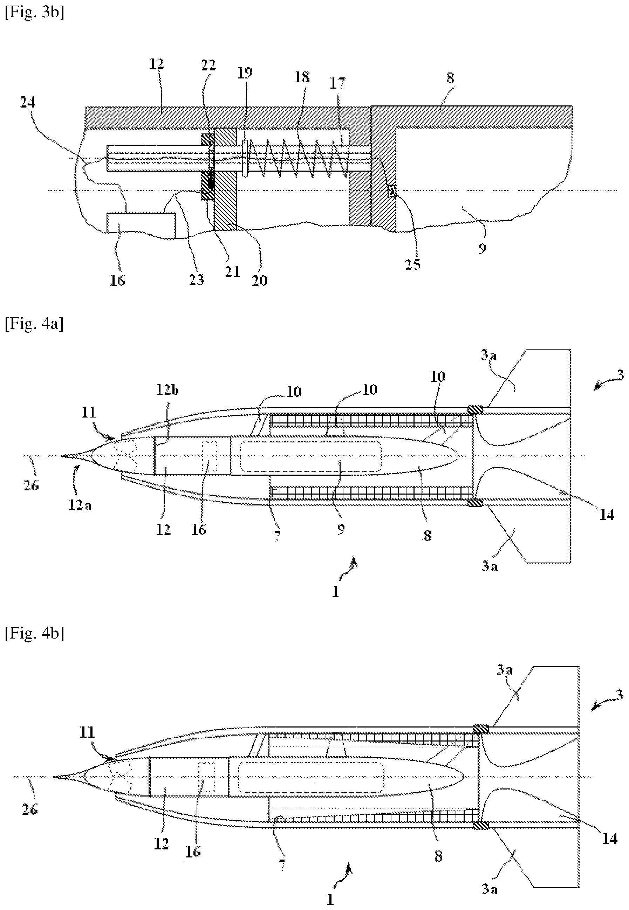

Plus simplement, lorsqu'il n'y a que deux positions nécessaires pour le module de pilotage (position arrière et position avant ou d'obturation de l'entrée d'air), et comme schématisé aux figures 3a et 3b, au moins une des colonnettes 17 (ou toutes les colonnettes) pourra être équipée d'un ressort de traction 18 qui sera fixé d'une part à une collerette 19 de la colonnette 17 et d'autre part à la paroi du module de pilotage 12. Ce ressort de traction 18 constituera le moyen moteur qui est ici un moyen de stockage d'énergie potentielle élastique.

La figure 3a montre le montage avant tir. Le ressort 18 est au repos, à l'état non étiré. On voit que la colonnette 17 traverse une paroi transversale 20 solidaire du module 12 et qui assure son guidage. On voit également que la paroi 20 porte un verrou électromagnétique 21 (représenté très schématiquement) qui est destiné à venir s'engager dans une gorge 22 de la colonnette 17. Ce verrou électromagnétique 21 constitue un moyen de verrouillage qui va permettre d'assurer l'immobilisation du module de pilotage 12 en position arrière.

Au moment du tir (figure 3b), le module de pilotage 12 recule du fait de son inertie. Une goupille de maintien cisaillable (non représentée) pourra être prévue entre le corps 2 du projectile et le module de pilotage 12 pour sécuriser l'ensemble en position de stockage. Ce mouvement de recul a pour effet de tendre le ressort de traction 18 (stockage d'énergie potentielle élastique). Le module de pilotage 12 vient en appui contre l'enveloppe 8 de la charge militaire 9.

La gorge 22 se positionne en regard du verrou électromagnétique 21 qui assure le verrouillage de la colonnette 17. D'une façon classique le verrou électromagnétique 21 comprendra un ressort poussant un doigt de verrouillage dans la gorge 22. Aucune énergie n'est donc nécessaire pour le verrouillage.

A l'instant d'extinction défini sur trajectoire, le moyen de calcul 16 enverra par un fil de commande 23 une impulsion au verrou électromagnétique 21, provoquant la libération de ce dernier. Le ressort 18 assure alors le retour du module 12 à sa position avant.

Comme on le voit sur les figures 3a et 3b, la colonnette 17 pourra être tubulaire pour laisser passer un fil 24 permettant de commander la mise à feu de la charge militaire 9 par le biais d'un détonateur 25.

Bien entendu ces dessins sont très schématiques. En particulier le mode de fixation des colonnettes 17 sur l'enveloppe 8 n'est pas représenté, ni le mode de fixation du détonateur 25 ainsi que le cheminement de ce fil 24 au travers de la paroi de l'enveloppe 8. L'Homme du Métier maîtrise les différentes technologies permettant de réaliser ces différentes fonctions et qui sont robustes dans un environnement du tir canon (fortes accélérations, plage de variation de température importante).

A titre de variante il serait possible de mettre en oeuvre un ou plusieurs ressorts de compression. On pourra également définir d'autres types de moyens de verrouillage.

La figure 2 est une courbe montrant les différentes phases de vol du projectile 1 selon l'invention.

L'axe des abscisses correspond à la portée R du projectile et l'axe des ordonnées à l'altitude H du projectile.

Pour un tir à partir du point d'origine O, le projectile passe par plusieurs phases.

Lors du tir dans l'arme le culot de poussée 4 est en place, il maintient en position repliée l'empennage 3 et le protège, ainsi que le bloc combustible 7 (figure 1).

L'accélération du tir a pour effet de faire reculer le module de pilotage 12 qui se verrouille en appui contre l'enveloppe 8 (figures 3b et 4a).

A la sortie du tube de l'arme, le culot 4 est éjecté (par exemple par une charge d'éjection comme décrit par le brevet FR2768809 ou par un effort généré par un différentiel de pression, ou encore par l'effet de la rotation résiduelle communiquée par le tube.

L'éjection du culot 4 en sortie de tube permet le déploiement des ailettes 3a de l'empennage 3 (figure 4a) qui aérostabilise le projectile 1 tout au long de la trajectoire en assurant une vitesse de roulis résiduelle et entretenue de quelques tours par seconde. Cette vitesse de roulis est obtenue grâce à un calage angulaire des ailettes 3a par rapport à l'axe 26 du projectile ou bien par un biseau réalisé sur le bord d'attaque ou sur le bord de fuite de chaque ailette 3a. Cette rotation résiduelle est nécessaire pour piloter le projectile 1 sur 360° et indispensable dans le cas d'un pilotage par un seul plan de gouvernes 15.

La sortie du tube de l'arme se fait à une vitesse minimale de l'ordre de 700 m/s, soit de l'ordre de Mach 2, ce qui correspond, du point de vue de l'artillerie à un choix de charges propulsives assurant un tir en « zone 4 ». Il n'y a pas de limite supérieure de vitesse pour permettre l'amorçage d'un statoréacteur, la seule limite de ce type de propulseur est la vitesse qui est compatible d'une combustion subsonique à l'intérieur du projectile, soit une vitesse de projectile de l'ordre de Mach 5 (1700 m/s).

Une telle vitesse (Mach 2) permet l'amorçage du statoréacteur formé par l'architecture générale du projectile 1, une fois le module de pilotage 12 positionné en arrière et l'entrée d'air annulaire 11 libérée.

Cette vitesse d'amorçage est optimale pour l'allumage et le fonctionnement du statoréacteur. L'écoulement d'air qui pénètre dans la chambre 6 par l'entrée d'air 11 est comprimé, il s'échauffe et initie spontanément le bloc combustible annulaire 7 et se trouve accéléré dans la tuyère 14, puis évacué.

Le bloc combustible 7 qui est un semi-propergol tapisse les parois de la chambre de combustion 6 et réagit spontanément (auto-inflammation) avec l'écoulement issu de l'entrée d'air annulaire 11. Cet air a été comprimé et échauffé suite à son ralentissement par le profil de l'entrée d'air 11 qui fait office de compresseur statique et conduit à l'amorçage du statoréacteur.

La combustion du semi-propergol produit des gaz chauds éjectés dans la tuyère 14. La totalité des gaz est convertie en poussée efficace et accélère fortement le projectile 1. La vitesse obtenue est entre Mach 2 et Mach 5 (de 700m/s à 1700m/s) et une altitude maximale de l'ordre de 25000 m peut être obtenue en une minute environ.

La durée de la phase propulsée peut varier suivant l'architecture du statoréacteur (section de l'entrée d'air 11, masse de combustible, débit massique éjecté...) et les conditions de tir et peut aller de quelques secondes à quelques dizaines de secondes (1 minute au maximum, la limite étant fixée par l'altitude).

Cette phase propulsée est repérée par la flèche P sur la figure 2. Le projectile 1 est dans la configuration de la figure 4b. On a représenté sur cette figure le bloc combustible 7 partiellement consumé.

Le projectile 1 arrive à l'apogée A de la trajectoire (H=25 km) au bout d'environ 50 kilomètres (figure 2).

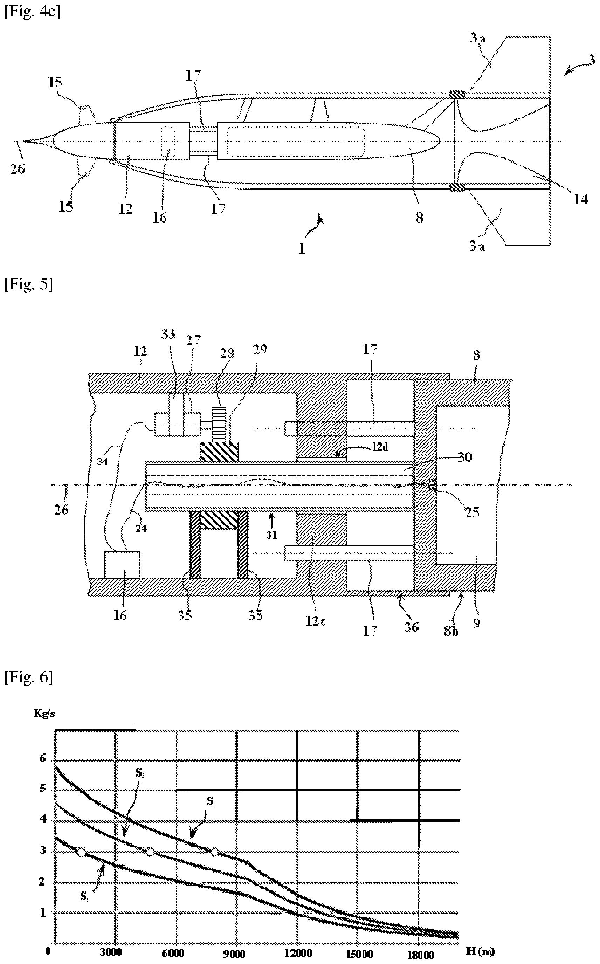

A ce stade (qui correspond à l'instant d'extinction ) le moyen de calcul 16 commande la libération du moyen moteur qui provoque le retour du module de pilotage 12 à sa position avant (figure 4c) dans laquelle il obture l'entrée d'air annulaire 11. Le moyen de calcul 16 provoque également le déploiement des gouvernes canard 15, après obturation de l'entrée d'air 11.

Le mécanisme de déploiement des gouvernes canard est un mécanisme classique qu'il n'est pas nécessaire de décrire en détails. On pourra par exemple se reporter aux brevets : FR2949848, FR2864613, FR2846079, FR2846080, WO2012090202 et WO2007133247, qui décrivent de tels mécanismes de déploiement.

L'instant du déploiement (ou instant d'extinction) est programmé avant tir et il dépend des conditions du tir considéré. Il est clair que, quel que soit l'instant auquel le déplacement du module de pilotage 12 vers l'avant est déclenché, la fermeture de l'entrée d'air annulaire 11 entraînera l'extinction du bloc combustible 7 par manque d'oxygène et l'arrêt de la propulsion.

Il est donc possible en fonction des besoins opérationnels de provoquer l'arrêt de la poussée du statoréacteur avant l'apogée A et de laisser le projectile poursuivre alors sa trajectoire balistique. On a délimité sur la figure 2 par des lignes pointillées verticales la zone Z dans laquelle l'arrêt du statoréacteur peut être commandé, donc dans laquelle l'instant d'extinction peut être défini.

Cette zone correspond à des durées de fonctionnement entre quelques secondes et une minute (au maximum). L'efficacité de la propulsion est optimale en début de trajectoire et dans tous les cas avant l'apogée A, ce qui correspond à des portées maximales pour la phase propulsée P comprises entre 5 et 50 km.

Une fois les gouvernes canards 15 déployées, le projectile se trouve dans sa phase guidée G (figure 2) le moyen de calcul 16 commandera le pilotage du projectile en direction de l'objectif T dont les coordonnées ont été introduites en mémoire avant le tir. Le moyen de calcul 16 est couplé à un moyen de positionnement du projectile qui pourra comprendre un récepteur type GPS et/ou Galiléo et/ou une centrale inertielle.

D'une façon classique et qu'il n'est pas nécessaire de décrire, pour réaliser le pilotage, les gouvernes déployées sont pivotées par un ou plusieurs moteurs qui sont commandés par le module de calcul 16.

On pourra aussi équiper le module de pilotage 12 de capteurs de cible infrarouge (non représentés) disposés au niveau de l'ogive du module 12, capteurs utilisés pour la phase finale de l'attaque et permettant d'obtenir une précision métrique.

Différents procédés de guidage sont décrits, par exemple dans les brevets FR2872928, EP1480000, FR2847033, EP2009387 ou EP1840692.

Du fait de la poussée obtenue en phase propulsée P par le statoréacteur, il devient possible d'atteindre des portées supérieures à 80 km à l'aide d'une artillerie conventionnelle utilisée dans des conditions de tir usuelles et au minimum en charge 4 (ce qui permet de limiter l'usure du tube et d'augmenter le potentiel d'utilisation du tube) et avec un profil d'obus classique tout en ayant une meilleure précision de tir (en référence à un tir classique à 40km avec Base-Bleed) grâce aux moyens de guidage.

La précision peut être métrique ou décamétrique suivant les techniques de guidage mises en oeuvre et les capteurs embarqués, et elle est indépendante du temps de vol, donc de la portée et des conditions météorologiques.

C'est tout l'intérêt de l'invention que d'apporter ces avantages opérationnels en utilisant une artillerie classique et des charges de tir existantes pour les systèmes d'artillerie.

La figure 5 montre de façon schématique un autre mode de réalisation d'un moyen moteur.

Selon ce mode, le moyen moteur est constitué par un moteur électrique 27 qui est équipé d'une roue dentée 28. Cette dernière engrène sur un écrou 29 taraudé qui est engagé sur un axe central 30 portant un filetage 31. Le moteur électrique 27 est solidaire du module de pilotage 12 par une bride 33. Il est relié au moyen de calcul 16 par une liaison filaire 34. Son fonctionnement est commandé par le moyen de calcul 16 qui incorporera des algorithmes assurant la mise en rotation du moteur 27 dans un sens ou l'autre en fonction de la chronométrie de tir (donc de la localisation du projectile 1 sur sa trajectoire).

L'axe central 30 est solidaire de l'enveloppe 8 et il est coaxial à l'axe 26 du projectile 1. L'axe central 30 traverse une paroi de fond 12c du module de pilotage 12 par un trou 12d qui a un diamètre supérieur à celui de l'axe 30 et ne gêne pas la rotation de l'axe central 30.

Trois colonnettes 17, régulièrement réparties angulairement autour de l'axe 26 (seules deux sont visibles sur cette coupe transversale), sont solidaires de l'enveloppe 8 et ajustées glissantes dans des perçages de la paroi de fond 12c du module de pilotage 12. Ces colonnettes 17 assurent le guidage du mouvement de translation du module de pilotage 12 par rapport à l'enveloppe 8 tout en interdisant la rotation relative du module 12 par rapport à l'enveloppe 8.

L'écrou 29 est par ailleurs immobilisé en translation par rapport au module de pilotage 12 par l'intermédiaire de deux parois 35 solidaires du module de pilotage 12.

Les parois 35 pourront avoir des surfaces recouvertes d'un revêtement anti-frottement pour faciliter la rotation de l'écrou 29. Suivant les courses nécessaires, elles pourront éventuellement être percées pour ne pas gêner le passage de la colonnette 17.

L'axe central 30 étant immobile en rotation et en translation par rapport à l'enveloppe 8, la rotation du moteur 27 va provoquer la rotation de l'écrou 29 qui, étant solidaire en translation du module de pilotage 12, va provoquer le déplacement axial du module de pilotage 12 le long de l'axe central 30.

Il est ainsi possible de déplacer le module de pilotage 12 pour lui donner :
- sa position arrière, en appui contre l'enveloppe 8 de la charge militaire 9 ;
- sa position avant dans laquelle le module de pilotage 12 obture l'entrée d'air 11 ;
- mais aussi toute position intermédiaire entre ces deux positions extrêmes.

On peut ainsi aisément piloter la position longitudinale du module de pilotage 12 et, à la différence du mode de réalisation précédemment décrit, il devient possible de déplacer axialement le module de pilotage 12 d'une façon décorrélée par rapport au tir du projectile.

Comme on le voit sur la figure 5, le module de pilotage 12 comporte une jupe arrière 36 qui glisse sur une paroi externe 8b de l'enveloppe 8. Une telle disposition permet d'améliorer la continuité de l'écoulement de l'air lors du fonctionnement du statoréacteur et pour toutes les positions longitudinales du module de pilotage 12.

Elle permet aussi d'assurer une étanchéité à ce niveau, empêchant l'entrée de l'air dans le module de pilotage 12.

Grâce à ce mode de réalisation de l'invention, il devient ainsi possible de retarder le début de la phase de propulsion par rapport au coup de canon.

On définit alors un instant, dit instant d'allumage, auquel le recul du module de pilotage 12 sera commandé après le tir, provoquant ainsi l'allumage du statoréacteur.

Une telle disposition s'avère intéressante d'un point de vue opérationnel pour améliorer la discrétion du tir en évitant les lueurs d'allumage du bloc 7 de semi-propergol. Elle permet également d'optimiser le profil de la trajectoire du projectile 1. Ce mode de réalisation permet également d'éviter de dépasser Mach 5 lors d'un tir à vitesse initiale élevée.

Grâce à ce mode de réalisation, il est possible également de faire varier la section de l'entrée d'air 11 en fonction de l'altitude du projectile.

Il est connu qu'un statoréacteur nécessite une entrée d'air de plus grande section pour les altitudes élevées.

Le moyen de calcul 16 pourra ainsi commander à l'issue d'un premier intervalle de temps (à l'instant d'allumage) après la sortie du tube de l'arme (de l'ordre de quelques dixièmes de secondes) le recul du module de pilotage 12 pour ouvrir l'entrée d'air 11 d'une section minimale permettant d'allumer le statoréacteur.

Après un second intervalle de temps défini le moyen de calcul 16 provoquera un nouveau recul du module de pilotage 12 pour ouvrir un peu plus l'entrée d'air 11 et optimiser ainsi le fonctionnement du statoréacteur en accroissant le débit d'air pour une altitude dans laquelle l'air est moins dense.

Le moyen de calcul 16 peut ainsi déplacer, progressivement ou de façon incrémentale, à différents instants sur trajectoire, le module de pilotage 12 de sa position avant (entrée d'air 11 fermée) vers sa position arrière (ouverture maximale de l'entrée d'air 11).

A titre d'exemple indicatif, on a représenté à la figure 6 trois courbes S₁, S₂ et S₃ qui montrent l'évolution du débit d'air admis (en kilogrammes par seconde - Kg/s) au travers d'une entrée d'air de section constante et en fonction de l'altitude H (en mètres) du projectile 1. Ce débit diminue avec l'altitude car l'air est moins dense en altitude et il dépend aussi de la vitesse.

Selon cet exemple indicatif, la courbe S₁ correspond à une section d'entrée d'air de 3000 mm², la courbe S₂ correspond à une section d'entrée d'air de 4000 mm² et la courbe S₃ correspond à une section d'entrée d'air de 5000 mm².

On voit donc que, pour maintenir le même débit dans le statoréacteur, il suffit d'augmenter la section de l'entrée d'air 11. Par exemple si on veut centrer le débit autour de 3 kg/s, on fera passer la section d'une valeur de l'ordre de 3000 mm² entre 0 et 3000 m d'altitude à une section de 4000 mm² entre 3000 et 6000 m d'altitude, puis à une section de 5000 mm² entre 6000 m et 9500 m d'altitude.

Connaissant l'altitude des points auxquels il faut modifier la section de l'entrée d'air 11 et la table de tir du projectile, on connaît également les instants auxquels le moyen de calcul 16 doit envoyer les ordres de déplacement du module de commande 12 ainsi que l'amplitude qu'il faut donner au déplacement pour augmenter la section (le rapport déplacement / section est une donnée de construction du projectile). Les temps entre chaque déplacement sont de l'ordre de 4 à 5 secondes. L'augmentation de la section de l'entrée d'air 11 pourra également être commandée de façon continue.

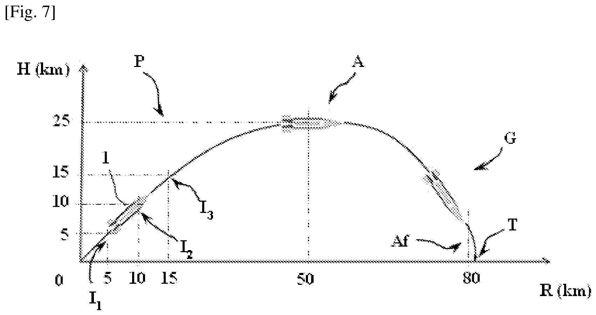

A titre d'exemple on a représenté à la figure 7 les différentes phases de vol du projectile 1 selon cette variante de l'invention.

Après le tir, et à un premier instant I₁ ou instant d'allumage (soit ici à environ 5 km de l'arme), le module de pilotage 12 est reculé pour ouvrir l'entrée d'air 11 et allumer le statoréacteur.

A un second instant I₂ (soit ici à environ 10 km de l'arme), le module de pilotage 12 est un peu plus reculé pour ouvrir d'avantage l'entrée d'air 11, ce qui améliore le fonctionnement du statoréacteur à une altitude plus élevée (ici 10 km).

A un troisième instant I₃ (soit ici à environ 15 km de l'arme), le module de pilotage 12 est encore plus reculé pour ouvrir l'entrée d'air 11 à son ouverture maximale ce qui améliore le fonctionnement du statoréacteur à une altitude encore plus élevée (ici 15 km).

Lorsque le projectile 1 est à son apogée A (à l'instant d'extinction qui a été défini), le moteur électrique 27 ramène le module de pilotage 12 à sa position avant dans laquelle il ferme l'entrée d'air 11 ce qui éteint le statoréacteur. Dans le même temps les gouvernes canard 15 sont déployées et la phase pilotée G commence.

Selon un mode particulier de réalisation, il sera possible en phase finale Af, de reculer à nouveau le module de pilotage 12 de façon à ouvrir à nouveau l'entrée d'air 11 et rallumer le bloc propulsif 7 du statoréacteur.

Cette commande interviendra lorsque le projectile 1 sera orienté en direction de sa cible T et qu'il ne sera donc plus nécessaire de corriger sa trajectoire. Les gouvernes 15 pourront lors de ce déplacement se trouver encastrées sur le corps 2 autour de l'entrée d'air 11, ce qui ne présente plus d'inconvénients, le guidage étant devenu inutile. Les gouvernes pourront alternativement se replier vers l'avant dans le module suivant la conception de leur cinématique.

On pourra aussi définir des gouvernes canards 15 comportant un axe de pivot positionnant la voilure de la gouverne à une distance radiale du module de pilotage 12 qui autorise ainsi le mouvement de recul du module de pilotage 12, gouvernes déployées, avec des perturbations ou interférences mécaniques minimales.

Cette accélération finale du projectile 1 d'une durée de 2 secondes environ, n'est pas indispensable mais elle permet d'augmenter l'énergie cinétique du projectile 1 en fin de trajectoire et augmente également la discrétion de l'attaque. Le vol du projectile repasse en régime supersonique et la vitesse à l'impact sur la cible est de l'ordre de Mach 2.

## Revendications

1. Projectile propulsé par statoréacteur, projectile (1) comprenant un corps externe (2) et un empennage déployable (3), projectile comportant à l'intérieur du corps une chambre (6) dans laquelle est logé un bloc (7) de semi-propergol annulaire ablatable ainsi qu'une enveloppe (8) renfermant une charge militaire, le corps externe (2) comportant une entrée d'air (11) pour permettre à l'air d'entrer dans la chambre (6), le corps comportant également une ouverture arrière (13) sur laquelle est positionnée une tuyère (14), projectile ***caractérisé en ce qu*** 'il comporte un module de pilotage (12) disposé axialement et qui s'étend au travers de l'entrée d'air (11), le module de pilotage (12) pouvant être déplacé axialement par un moyen moteur (18,27), lors du vol du projectile (1) et à un instant défini sur trajectoire, dit instant d'extinction, d'une position arrière dans laquelle il n'obture pas l'entrée d'air (11), vers une position avant dans laquelle il vient obturer l'entrée d'air (11), le module de pilotage (12) renfermant au moins deux gouvernes canard (15) qui sont déployables à l'extérieur du projectile (1) après obturation de l'entrée d'air (11).

2. Projectile propulsé selon la revendication 1, **caractérisé en ce que** le module de pilotage (12) renferme un moyen de calcul (16) incorporant des algorithmes de pilotage, le moyen de calcul (16) assurant la commande du déplacement du module de pilotage (12) à l'instant d'extinction.

3. Projectile propulsé selon une des revendications 1 ou 2, **caractérisé en ce qu'**il constitue un projectile d'artillerie destiné à être tiré par un canon, projectile dont le corps externe porte une ceinture dérapante (5).

4. Projectile propulsé selon la revendication 3, **caractérisé en ce que** le module de pilotage (12) se trouve avant tir dans sa position avant, le module de pilotage (12) reculant par inertie lors du tir canon de façon à venir occuper sa position arrière dans laquelle il est en appui contre l'enveloppe (8) de charge militaire.

5. Projectile propulsé selon la revendication 4, **caractérisé en ce qu'**il comporte un moyen de verrouillage (21) assurant l'immobilisation du module de pilotage (12) en position arrière.

6. Projectile propulsé selon la revendication 5, **caractérisé en ce que** le moyen moteur (18) comprend un moyen de stockage d'énergie potentielle élastique, ce moyen étant activé par le recul du module de pilotage (12) de sa partie avant à sa partie arrière, le moyen de verrouillage (21) étant libéré à l'instant d'extinction défini sur trajectoire.

7. Projectile propulsé selon la revendication 3, **caractérisé en ce que** le module de pilotage (12) se trouve avant tir dans sa position avant, le module de pilotage (12) pouvant être déplacé par le moyen moteur (27), après tir et à un instant, dit d'allumage, défini sur trajectoire, de façon à venir occuper sa position arrière.

8. Projectile propulsé selon la revendication 7, **caractérisé en ce que** le moyen moteur (27) peut déplacer, progressivement ou de façon incrémentale, à différents instants successifs définis sur trajectoire, le module de pilotage (12) de sa position avant vers sa position arrière.

9. Projectile propulsé selon une des revendication 7 ou 8, **caractérisé en ce que** le moyen moteur (27) peut déplacer le module de pilotage (12) vers sa position arrière à l'issue de la phase pilotée de façon à dégager l'entrée d'air (11) et accélérer ainsi le projectile (1) lors d'une phase terminale (Af) de sa trajectoire.

10. Projectile propulsé selon une des revendication 7 à 9, **caractérisé en ce que** le module de pilotage (12) comporte une jupe arrière (36) qui peut glisser sur une paroi externe (8b) de l'enveloppe (8) lors du déplacement du module de pilotage (12) de façon à améliorer la continuité de l'écoulement de l'air lors du fonctionnement du statoréacteur et pour toutes les positions longitudinales du module de pilotage (12).

11. Projectile propulsé selon une des revendications 3 à 10, **caractérisé en ce qu'**il comporte un culot arrière (4) obturant la tuyère (14) lors du tir, culot (4) assurant le maintien de l'empennage arrière (3) et qui est éjecté à la sortie du canon.

## Patentansprüche

1. - Projektil, angetrieben durch Staustrahltriebwerk, das Projektil (1) umfassend einen äußeren Körper (2) und ein entfaltbares Leitwerk (3), das Projektil umfassend im Inneren des Körpers eine Kammer (6), in der ein Block (7) aus ablatierbarer, ringförmiger Semi-Treibladung sowie eine Hülle (8) untergebracht sind, die eine militärische Ladung umschließt, der äußere Körper (2) umfassend einen Lufteinlass (11), um zu ermöglichen, dass die Luft in die Kammer (6) eintreten kann, der Körper umfassend auch eine hintere Öffnung (13), an der eine Düse (14) positioniert ist, wobei das Projektil **dadurch gekennzeichnet ist, dass** es ein Steuermodul (12) umfasst, das axial angeordnet ist und sich durch den Lufteinlass (11) erstreckt, wobei das Steuermodul (12) durch eine Antriebseinrichtung (18, 27) während des Flugs des Projektils (1) und zu einem auf der Flugbahn definierten Zeitpunkt, der als Löschzeitpunkt bezeichnet wird, von einer hinteren Position, in der es den Lufteinlass (11) nicht verschließt, zu einer vorderen Position, in der es den Lufteinlass (11) verschließt, axial verschoben werden kann, wobei das Steuermodul (12) mindestens zwei Canard-Ruder (15) umschließt, die nach Verschließen des Lufteinlasses (11) außerhalb des Projektils (1) entfaltbar sind.

2. - Angetriebenes Projektil nach Anspruch 1, **dadurch gekennzeichnet, dass** das Steuermodul (12) eine Recheneinrichtung (16) umschließt, die Steueralgorithmen enthält, wobei die Recheneinrichtung (16) die Bewegung des Steuermoduls (12) zum Löschzeitpunkt steuert.

3. - Angetriebenes Projektil nach einem der Ansprüche 1 oder 2, **dadurch gekennzeichnet, dass** es ein Artillerieprojektil darstellt, das dazu bestimmt ist, von einer Kanone abgefeuert zu werden, wobei der äußere Körper des Projektils ein Rutschband (5) trägt.

4. - Angetriebenes Projektil nach Anspruch 3, **dadurch gekennzeichnet, dass** sich das Steuermodul (12) vor Abfeuern in seiner vorderen Position befindet, wobei das Steuermodul (12) beim Abfeuern der Kanone durch Trägheit zurückläuft, um seine hintere Position einzunehmen, in der es an der Hülle (8) der militärischen Ladung anliegt.

5. - Angetriebenes Projektil nach Anspruch 4, **dadurch gekennzeichnet, dass** es eine Verriegelungseinrichtung (21) umfasst, die die Immobilisierung des Steuermoduls (12) in der hinteren Position gewährleistet.

6. - Angetriebenes Projektil nach Anspruch 5, **dadurch gekennzeichnet, dass** die Antriebseinrichtung (18) eine potentiell elastische Energiespeichereinrichtung umfasst, wobei diese Einrichtung durch den Rücklauf des Steuermoduls (12) von seinem vorderen Teil zu seinem hinteren Teil aktiviert wird, wobei die Verriegelungseinrichtung (21) zu dem auf der Flugbahn definierten Löschzeitpunkt freigegeben wird.

7. - Angetriebenes Projektil nach Anspruch 3, **dadurch gekennzeichnet, dass** sich das Steuermodul (12) vor Abfeuern in seiner vorderen Position befindet, wobei das Steuermodul (12) nach Abfeuern und zu einem auf der Flugbahn definierten Zeitpunkt, dem sogenannten Zündzeitpunkt, durch die Antriebseinrichtung (27) verschoben werden kann, um seine hintere Position einzunehmen.

8. - Angetriebenes Projektil nach Anspruch 7, **dadurch gekennzeichnet, dass** die Antriebseinrichtung (27) das Steuermodul (12) schrittweise oder inkrementell zu verschiedenen aufeinanderfolgenden, auf der Flugbahn definierten Zeitpunkten von seiner vorderen Position zu seiner hinteren Position bewegen kann.

9. - Angetriebenes Projektil nach einem der Ansprüche 7 oder 8, **dadurch gekennzeichnet, dass** die Antriebseinrichtung (27) das Steuermodul (12) nach Abschluss der gesteuerten Phase in seine hintere Position bewegen kann, um den Lufteinlass (11) freizugeben und dadurch das Projektil (1) in einer Endphase (Af) seiner Flugbahn zu beschleunigen.

10. - Angetriebenes Projektil nach einem der Ansprüche 7 bis 9, **dadurch gekennzeichnet, dass** das Steuermodul (12) eine Heckschürze (36) umfasst, die bei der Bewegung des Steuermoduls (12) an einer Außenwand (8b) des Gehäuses (8) gleiten kann, um die Kontinuität des Luftstroms während des Betriebs des Staustrahltriebwerks und für alle Längspositionen des Steuermoduls (12) zu verbessern.

11. - Angetriebenes Projektil nach einem der Ansprüche 3 bis 10, **dadurch gekennzeichnet, dass** es einen hinteren Boden (4) umfasst, der die Düse (14) beim Abfeuern verschließt, wobei der Boden (4) das hintere Leitwerk (3) hält und beim Austritt aus der Kanone ausgeworfen wird.

## Claims

1. - A ramjet-propelled projectile, the projectile (1) comprising an outer body (2) and a deployable tail unit (3), the projectile comprising, inside the body, a chamber (6) in which is housed a block (7) of ablatable annular solid-propellant and an casing (8) enclosing a military load, the outer body (2) comprising an air inlet (11) for allowing air to enter the chamber (6), the body also comprising a rear opening (13) on which a nozzle (14) is positioned, the projectile bring **characterised in that** it comprises a control module (12) arranged axially and that extends through the air inlet (11), the control module (12) being able to be moved axially by a motor means (18, 27), during the flight of the projectile (1) and at a defined instant on a trajectory, referred to as instant of extinction, from a rear position in which it does not close the air inlet (11) toward a forward position in which it closes the air inlet (11), the control module (12) enclosing at least two canard controls (15) which are deployable outside the projectile (1) after closing the air inlet (11).

2. - The propelled projectile according to claim 1, **characterised in that** the control module (12) contains a calculation means (16) incorporating driving algorithms, the calculation means (16) controlling the movement of the control module (12) at the instant of extinction.

3. - The propelled projectile according to one of claims 1 or 2, **characterised in that** it constitutes an artillery projectile intended to be fired by a gun, wherein the outer body of the projectile carries a slipping obturator ring (5).

4. - The propelled projectile according to claim 3, **characterised in that** the control module (12) is in its forward position before firing, the control module (12) recoiling by inertia during firing so as to occupy its rear position in which it bears against the casing (8) of the military load.

5. - The propelled projectile according to claim 4, **characterised in that** it comprises a locking means (21) ensuring the immobilisation of the control module (12) in the rear position.

6. - The propelled projectile according to claim 5, **characterised in that** the motor means (18) comprises an elastic potential energy storage means, this means being activated by the recoil of the control module (12) from its front part to its rear part, the locking means (21) being released at the instant of extinction defined on the trajectory.

7. - The propelled projectile according to claim 3, **characterised in that** before firing the control module (12) is in its forward position before firing, the control module (12) being able to be moved by the motor means (27), after firing and at a instant, referred to as the ignition instant, defined on the trajectory, so as to come to occupy its rear position.

8. - The propelled projectile according to claim 7, **characterised in that** the motor means (27) can move, progressively or incrementally, at different successive instants defined on the trajectory, the control module (12) from its forward position to its rear position.

9. - The propelled projectile according to one of claims 7 or 8, **characterised in that** the motor means (27) can move the control module (12) toward its rear position at the end of the controlled phase so as to clear the air inlet (11) and thus accelerate the projectile (1) during a terminal phase (Af) of its trajectory.

10. - The propelled projectile according to one of claims 7 to 9, **characterised in that** the control module (12) comprises a rear skirt (36) which can slide on an outer wall (8b) of the casing (8) during the movement of the control module (12) so as to improve the continuity of the flow of air during operation of the ramjet and for all longitudinal positions of the control module (12).

11. - The propelled projectile according to one of claims 3 to 10, **characterised in that** it comprises a rear base (4) closing the nozzle (14) during firing, the base (4) holding the rear tail unit (3) and being ejected at the exit of the gun.
